# EUROPÄISCHE PATENTANMELDUNG

(11) **EP 1 955 803 A2**
(43) Veröffentlichungstag der Anmeldung: **13.08.2008**
(21) Anmeldenummer: 07023724.3
(22) Anmeldetag: 07.12.2007
(51) Int. Cl.: B23D 49/16, B23D 51/02

(54) **Hubsäge, insbesondere Stichsäge**

(30) Priorität: 09.02.2007 DE 102007006481
(71) Anmelder: Festool GmbH, 73240 Wendlingen (DE)
(72) Erfinder: Reuss, Torsten, 73265 Dettingen/Teck (DE); Kretschmar, Volker, 73257 Köngen (DE)
(74) Vertreter: Bregenzer, Michael

(57) **Zusammenfassung**

Eine Hubsäge, insbesondere Stichsäge, weist eine Antriebseinrichtung zum Antreiben eines Sägeblattes (7) zu einer hin und her gehenden Hubbewegung auf. Den beiden Seitenflächen (8) des Sägeblattes (7) ist jeweils ein Führungselements (21, 22) zur seitlichen Führung des Sägeblattes (7) zugeordnet. Die beiden Führungselemente (21, 22) werden jeweils von einem Exzenterelement (33, 34) gebildet, das um eine zur Längsrichtung des Sägeblattes (7) parallele Exzenterachse (35, 36) verdrehbar gelagert und durch eine Federeinrichtung (37, 38) so belastet ist, dass das Verdrehen des jeweiligen Exzenterelements (33, 34) im Sinne einer Vergrößerung des Abstandes zwischen den beiden Exzenterelementen (33, 34) entgegen der Federkraft erfolgt.

## Beschreibung

Die Erfindung betrifft eine Hubsäge, insbesondere Stichsäge, mit einer Antriebseinrichtung zum Antreiben eines Sägeblattes länglicher Gestalt, das zwei zueinander parallele Seitenflächen aufweist und an seiner Vorderseite zur sägenden Bearbeitung eines Werkstücks ausgebildet ist, zu einer hin und her gehenden Hubbewegung und zwei den beiden Seitenflächen des Sägeblattes zugeordneten Führungselementen zur seitlichen Führung des Sägeblattes.

Bei einer aus der DE 41 21 989 A1 bekannten Hubsäge dieser Art sind die Führungselemente jeweils am vorderen Ende eines Tragarms angeordnet und weisen eine plättchenartige Gestalt auf. Zur Anpassung an die jeweilige Sägeblattdicke können die beiden Tragarme mittels einer Verstellschraube aufeinander zu und voneinander weg bewegt werden.

Vor dem Einsetzen des Sägeblattes müssen die Tragarme in einen solchen Abstand voneinander gebracht werden, dass der zwischen den Führungselementen gebildete Spalt um etliches breiter als die Sägeblattdicke ist. Nach dem Einstecken des Sägeblattes werden die Tragarme dann wieder aufeinander zu bewegt, so dass die Führungselemente am Sägeblatt anliegen und ihre Führungsfunktion ausüben können. Dies ist nicht nur umständlich in der Handhabung sondern bringt auch die Gefahr mit sich, dass die Führungselemente entweder zu fest am Sägeblatt anliegen oder mit Spiel zum Sägeblatt angeordnet sind. Dies fördert den Verschleiß bzw. ergibt eine ungenaue Sägeblattführung.

Ausgehend hiervon liegt der vorliegenden Erfindung die Aufgabe zu Grunde, eine Hubsäge der eingangs genannten Art zu schaffen, bei der die mit dem Einsetzen des Sägeblattes zwischen die Führungselemente verbundene Handhabung möglichst einfach sein soll und bei der das Sägeblatt durch die Führungselemente möglichst stabil und verschleißarm geführt wird.

Diese Aufgabe wird erfindungsgemäß dadurch gelöst, dass die beiden Führungselemente jeweils von einem Exzenterelement gebildet werden, das um eine zur Längsrichtung des Sägeblattes parallele Exzenterachse verdrehbar gelagert und durch eine Federeinrichtung so belastet ist, dass das Verdrehen des jeweiligen Exzenterelements im Sinne einer Vergrößerung des Abstandes zwischen den beiden Exzenterelementen entgegen der Federkraft erfolgt.

Auf diese Weise passen sich die Führungselemente von selbst an die Dicke des jeweils verwendeten Sägeblattes an, so dass der Benutzer keine weiteren Manipulationen zur Einstellung der Führungselemente vornehmen muss. Das Sägeblatt wird einfach zwischen die beiden Führungselemente eingedrückt. Die Führungselemente werden unabhängig von der Dicke des Sägeblattes durch die Federkraft so gegen das Sägeblatt gehalten, dass ein praktisch verschleißfreier Betrieb stattfindet und das Sägeblatt sicher und stabil geführt wird. Die Federkraft kann ohne weiteres entsprechend abgestimmt werden.

Ein weiterer Vorteil besteht darin, dass die Exzenterelemente mit verhältnismäßig großer Länge ausgebildet werden können, was die Führungsstabilität weiter erhöht.

Die erfindungsgemäßen Exzenterelemente sind verhältnismäßig einfach zu realisieren, so dass auch eine kostengünstige Lösung vorliegt.

Zweckmäßige Ausgestaltungen der Erfindung sind in den Unteransprüchen angegeben.

Nachstehend wird ein Ausführungsbeispiel der Erfindung anhand der Zeichnung im Einzelnen erläutert. Es zeigen:

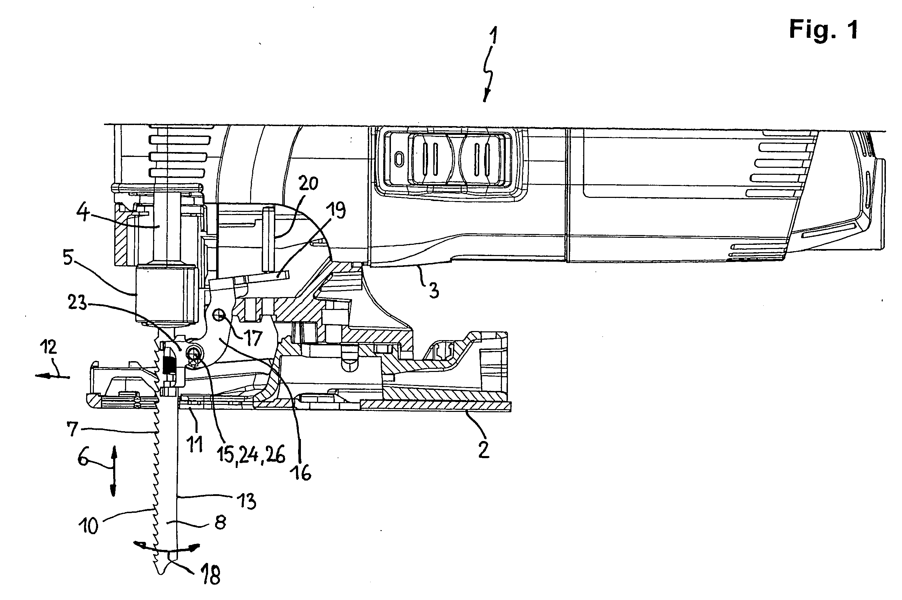

- Figur 1: eine erfindungsgemäße Hubsäge in Gestalt einer Stichsäge in abgeschnittener Seitenansicht, wobei der vorliegend interessierende Bereich im Längsschnitt gezeigt ist,

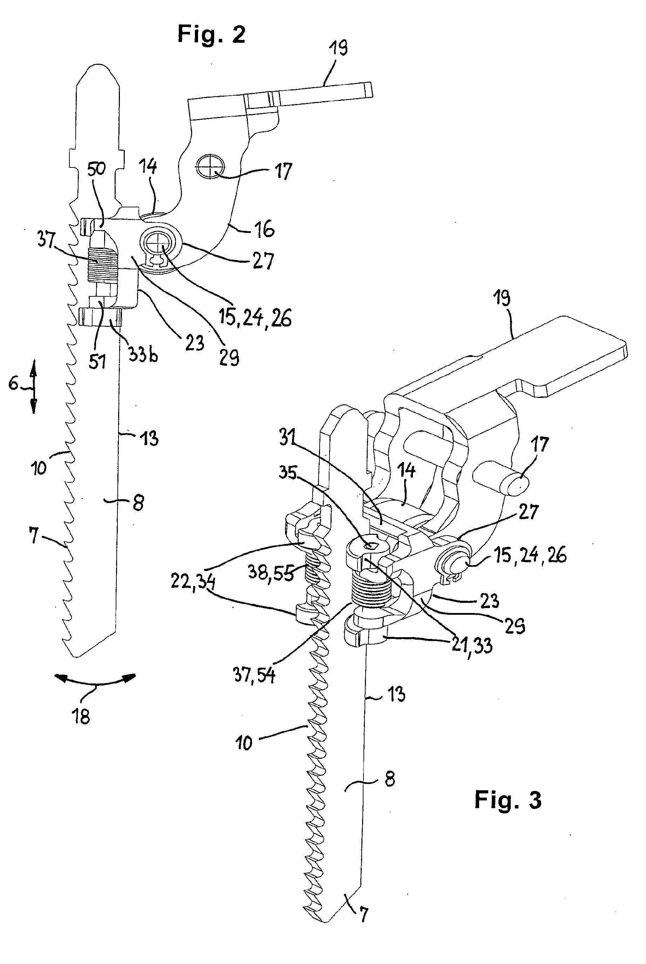

- Figur 2: das Sägeblatt mit dem Pendelrollenhalter und dem Führungshalter in gesonderter Darstellung in Seitenansicht,
- Figur 3: die Anordnung nach Figur 2 in Schrägansicht,
- Figur 4: den Führungshalter in gesonderter Darstellung in Schrägansicht von vorne gesehen,

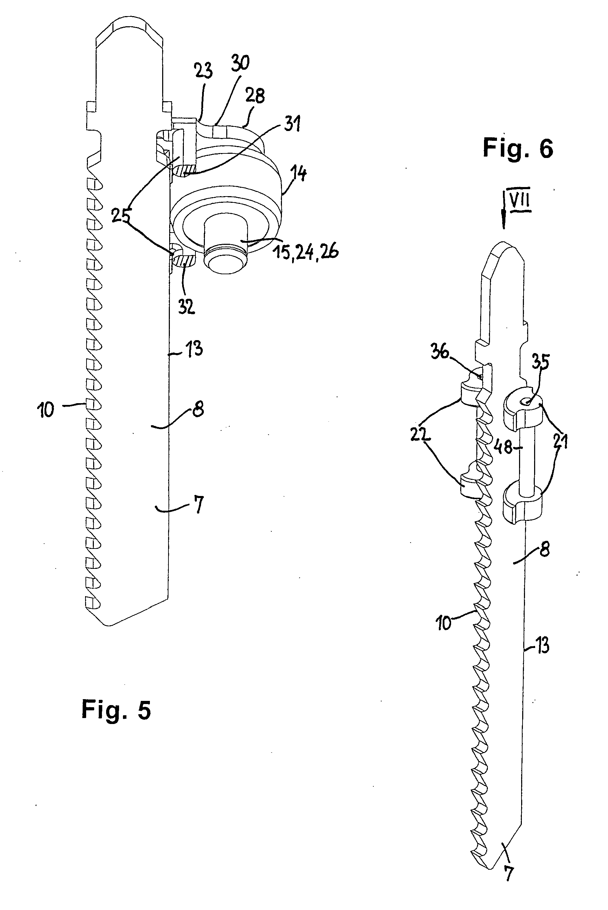

- Figur 5: die Pendelrolle zusammen mit dem geschnitten dargestellten Führungshalter und dem Sägeblatt in seitlicher Schrägansicht,
- Figur 6: die beiden die Führungselemente bildenden Exzenterelemente (ohne den sonstigen Führungshalter) und das zwischen den beiden Exzenterelementen angeordnete Sägeblatt in Schrägansicht und
- Figuren 7 bis 9: jeweils die Anordnung nach Figur 6 mit unterschiedlich dickem Sägeblatt in Stirnansicht gemäß Pfeil VII in Figur 6.

Die aus der Zeichnung hervorgehende Stichsäge 1 weist einen Sägetisch 2 auf, mit dem die Stichsäge auf das zu sägende Werkstück (nicht dargestellt) aufgelegt wird. Die Stichsäge 1 besitzt ferner oberhalb des Sägetisches 2 eine Antriebseinheit 3, die in üblicher Weise einen Antriebsmotor und ein Getriebe enthält, über das beim Betrieb eine Hubstange 4 mit einem Sägeblatthalter 5 zu einer periodisch hin und her gehenden Hubbewegung in Richtung gemäß Doppelpfeil 6 angetrieben wird. Der Sägeblatthalter 5 dient zum auswechselbaren Befestigen eines die Hubbewegung mitmachenden und den Sägeschnitt ausführenden Sägeblattes 7, das eine längliche Gestalt mit zwei zueinander parallelen Seitenflächen aufweist und an seiner Vorderseite 10 zur sägenden Bearbeitung des Werkstücks ausgebildet ist und hierzu, wie dargestellt, eine Sägezahnreihe trägt.

Die Stichsäge 1 ist als Handgerät ausgebildet und kann vom Benutzer am Gehäuse der Antriebseinheit 3 ergriffen werden.

Das Sägeblatt 7 ist am vorderen Endbereich der Stichsäge 1 angeordnet und wird, wie bereits erwähnt, mit seinem oberen Endbereich vom Sägeblatthalter 5 gehalten. Das Sägeblatt 7 erstreckt sich von der Antriebseinheit 3 im Wesentlichen rechtwinkelig zum Sägetisch 2 nach unten bis unterhalb des Sägetisches 2, der im Bereich des Sägeblattes 7 eine nach vorne hin offene Tischausnehmung 11 für den Durchtritt des Sägeblattes 7 enthält. Schiebt man die Stichsäge 1 über das betreffende Werkstück in Vorschubrichtung 12 nach vorne, sägt das auf und ab gehende Sägeblatt 7 einen Schlitz in das Werkstück.

Die Antriebseinheit 3 ist auf den Sägetisch 2 aufgesetzt und dabei um die Vorschubrichtung 12 verschwenkbar und in der jeweiligen Schwenkstellung feststellbar. Die Antriebseinheit 3 und mit dieser das Sägeblatt 7 können somit nach der einen oder andere Seite hin verschwenkt werden, sodass das Sägeblatt 7 schräg zum Werkstück ausgerichtet ist und an diesem einen entsprechenden Schrägschnitt, beispielsweise einen Gehrungsschnitt, anbringt. Weitere Einzelheiten dieser Verschwenkbarkeit der Antriebseinheit 3 interessieren vorliegend nicht.

Das Sägeblatt 7 stützt sich mit seiner der Vorderseite 10 entgegengesetzten Rückseite 13 an einer um eine Rollenachse 15 drehbar gelagerten Pendelrolle 14 ab, die an einem Pendelrollenhalter 16 angeordnet ist, der um eine Pendelachse 17 pendelnd gelagert ist und beim Betrieb synchron zur Hubbewegung des Sägeblattes 7 zu einer Pendelbewegung angetrieben wird, sodass die Pendelrolle 14 pendelnd auf die Sägeblatt-Rückseite 13 einwirkt und der Hubbewegung 6 des Sägeblattes 7 eine Pendelkomponente gemäß Doppelpfeil 18 überlagert wird. In diesem Zusammenhang wird noch darauf hingewiesen, dass die Hubstange 4 der Pendelbewegung entsprechend gelenkig gelagert ist. Außerdem wird die Hubstange 4 und über diese das Sägeblatt 7 durch eine gegen die Pendelrolle 14 gerichtete Federkraft beaufschlagt.

Die Rollenachse 15 und die Pendelachse 17 sind parallel zueinander und verlaufen quer zum Sägeblatt 7 an diesem vorbei.

Der Pendelrollenhalter 16 weist einen der Pendelrolle 14 mit Bezug auf die Pendelachse 17 entgegengesetzten Hebelarm 19 auf, auf den ein Stößel 20 einwirkt, dessen Auf- und Abbewegung synchron mit der Hubbewegung 6 der Hubstange 4 erfolgt.

Um zu vermeiden, dass das Sägeblatt 7 aufgrund der beim Sägevorgang vom Werkstück ausgeübten Kräfte seitlich ausweicht, ist den beiden Seitenflächen 8, 9 des Sägeblattes 7 jeweils ein Führungselement 21, 22 zugeordnet. Durch die an den beiden Seitenflächen 8, 9 des Sägeblattes 7 anliegenden Führungselemente 21, 22 erhält man eine seitliche Führung des Sägeblattes 7 und somit eine Stabilisierung des Sägeblattes 7 in Querrichtung. Die Führungselemente 21, 22 befinden sich etwa in Höhe des Sägetisches 2 und im auf das Werkstück aufgesetzten Zustand nur wenig oberhalb des Werkstücks.

Die beiden Führungselemente 21, 22 sind an einem Führungshalter 23 angeordnet, der um eine zur Pendelachse 17 parallele Schwenkachse 24 schwenkbar gelagert ist. Der Führungshalter 23 bildet eine der Sägeblatt-Rückseite 13 zugeordnete und beim Betrieb an dieser anliegende Abstützeinrichtung 25, sodass der Führungshalter 23 unter Beibehaltung seiner Ausrichtung relativ zum Sägeblatt 7 eine der Pendelkomponenten 18 der Hubbewegung des Sägeblattes 7 entsprechende, hin und her schwenkende Schwenkbewegung ausführt.

Die Schwenkachse 24 ist am Pendelrollenhalter 16 angeordnet. Dabei verläuft sie zweckmäßigerweise koaxial zur Rollenachse 15 der Pendelrolle 14, sodass die Schwenkachse 24 des Führungshalters 23 und die Rollenachse 15 der Pendelrolle 14 - wie beim dargestellten Ausführungsbeispiel vorgesehen - von einer gemeinsamen Lagerachse 26 gebildet werden können.

Der Führungshalter 23 weist zwei die Pendelrolle 14 seitlich übergreifende Lagerpartien 27, 28 auf, sodass die Pendelrolle 14 zwischen den beiden Lagerpartien 27, 28 angeordnet ist. Der Führungshalter 23 ist mit seinen Lagerpartien 27, 28 auf der gemeinsamen Lagerachse 26 gelagert.

Eine weitere zweckmäßige Maßnahme besteht darin, dass der Führungshalter 23 in axialer Richtung der ihn lagernden Schwenkachse 24 bewegbar angeordnet ist, sodass er sich stets von selbst auf das Sägeblatt 7 ausrichten kann.

Die Schwenkachse 24 des Führungshalters 23 könnte prinzipiell auch an anderer Stelle als koaxial zur Pendelrollenachse 15 angeordnet sein. Die Lagerung der Pendelrolle 14 und des Führungshalters 23 auf der gemeinsamen Lagerachse 26 ist jedoch platzsparend und kostengünstig.

Der Führungshalter 23 weist zwei jeweils eines der Führungselemente 21, 22 haltende Seitenpartien 29, 30 auf, die das Sägeblatt 7 seitlich übergreifen. Ferner wird die an der Sägeblatt-Rückseite 13 anliegende Abstützeinrichtung 25 von zwei in Längsrichtung des Sägeblattes 7 mit Abstand zueinander angeordneten, die beiden Seitenpartien 29, 30 miteinander verbindenden Abstützstegen 31, 32 des Führungshalters 23 gebildet. Prinzipiell könnte auch nur ein Abstützsteg vorhanden sein, der in Längsrichtung des Sägeblattes 7 eine solche Erstreckung hat, dass der Führungshalter 23 durch seine Anlage am Sägeblatt 7 stets zum Sägeblatt 7 ausgerichtet bleibt.

Der Führungshalter 23 liegt mit seiner Abstützeinrichtung 25 in Längsrichtung des Sägeblattes 7 beiderseits der Schwenkachse 24 des Führungshalters 23 an der Sägeblatt-Rückseite 13 an.

Aus der Zeichnung geht ferner hervor, dass die Lagerpartien 27, 28, mit denen der Führungshalter 23 auf seiner Schwenkachse 24 gelagert ist, an den Seitenpartien 29, 30 des Führungshaltes 23 angeordnet sind.

Die beiden Führungselemente 21, 22 werden jeweils von einem Exzenterelement 33, 34 gebildet, das um eine zur Längsrichtung des Sägeblattes 7 parallele Exzenterachse 35, 36 (gemeint ist hier die Exzenterachslinie) verdrehbar am Führungshalter 23 gelagert und durch eine Federeinrichtung 37, 38 so belastet ist, dass sich die jeweilige Federkraft beim Verdrehen des betreffenden Exzenterelements 33, 34 im Sinne einer Vergrößerung des Abstandes zwischen den beiden Exzenterelementen 33, 34 vergrößert. Auf diese Weise werden die beiden Exzenterelemente 33, 34 bei eingesetztem Sägeblatt 7 durch die Federeinrichtungen 37, 38 gegen die Seitenflächen 8, 9 des Sägeblattes 7 gedrückt.

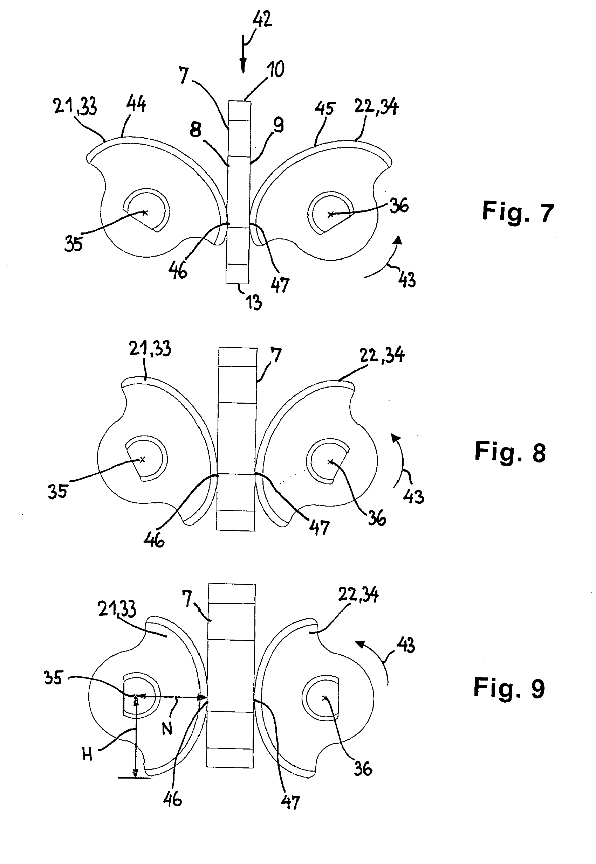

Bei weggenommenem Sägeblatt 7 können die beiden Exzenterelemente 33, 34 jeweils an einem Anschlag 39, 40 des Führungshalters 23 anliegen, sodass sich die Exzenterelemente 33, 34 mit Abstand gegenüberliegen und einen Einsteckspalt 41 zum Einstecken des Sägeblattes 7 begrenzen. Der Einsteckspalt 41 ist schmäler als das dünnste der zur Anwendung kommenden Sägeblätter. Das Einstecken des jeweiligen Sägeblattes 7 erfolgt von vorne her in Richtung gemäß Pfeil 42 (siehe Figur 7) mit der Sägeblatt-Rückseite 13 voran. Trifft die Sägeblatt-Rückseite 13 gegen die beiden Exzenterelemente 33, 34, verdrehen sich die Exzenterelemente 33, 34 in der Einsteckrichtung 42 des Sägeblattes 7 entsprechender Drehrichtung 43 entgegen der durch die Federeinrichtungen 37, 38 ausgeübten Federkräfte, sodass sich der Einsteckspalt 41 bis auf die Dicke des jeweiligen Sägeblattes 7 verbreitert.

Zum Entnehmen des Sägeblattes 7 zieht man dieses nach vorne heraus. Das Sägeblatt 7 rutscht dabei an den Exzenterelementen 33, 34 vorbei.

Es versteht sich, dass die beiden Exzenterelemente 33, 34 jeweils eine exzentrisch zur jeweiligen Exzenterachse 35, 36 verlaufende Umfangsfläche 44, 45 aufweisen, mit der sie am Sägeblatt 7 anliegen. In den Figuren 7, 8 und 9 befinden sich unterschiedlich dicke Sägeblätter 7 zwischen den beiden Exzenterelementen 33, 34. Dabei befinden sich die Exzenterelemente 33, 34 in Abhängigkeit von der Sägeblattdicke in einer unterschiedlichen Drehlage, sodass sie je nach der Sägeblattdicke mit einer anderen Stelle 46, 47 ihrer Umfangsfläche 44, 45 am betreffenden Sägeblatt 7 anliegen. Dabei sollte die Verbindungslinie zwischen der jeweiligen Exzenterachse 35, 36 und der betreffenden Umfangsstelle 46, 47 bei jeder Sägeblattdicke möglichst nahe einem Winkel von 90° zur Sägeblatt-Seitenfläche 8, 9 verlaufen. Hierzu ist zweckmäßigerweise vorgesehen, dass die Umfangsflächen 44, 45 der Exzenterelemente 33, 34 jeweils im Wesentlichen einer Ellipse entsprechen, wobei das Verhältnis zwischen der Länge N der Ellipsen-Nebenachse und der Länge H der Ellipsen-Hauptachse kleiner als 0,8 ist. Dies ergibt einen guten Kompromiss für alle in Frage kommenden Sägeblattdicken.

Die beiden Exzenterelemente 33, 34 können in Längsrichtung des Sägeblattes 7 beliebig lang ausgebildet werden, sodass das Sägeblatt 7 über eine entsprechend große Länge hinweg von den Exzenterelementen 33, 34 geführt wird. Es ist jedoch keine über die Länge durchgehende exzentrische Umfangsfläche 44, 45 erforderlich. In diesem Zusammenhang ist zweckmäßigerweise vorgesehen, dass die beiden Exzenterelemente 33, 34 jeweils von zwei - prinzipiell könnten es auch mehr als zwei sein - mit axialem Abstand, das heißt in Richtung der Exzenterachse 35, 36, zueinander angeordneten Einzelexzentergliedern 33a, 33b beziehungsweise 34a, 34b gebildet werden, die durch ein verdrehbar am Führungshalter 23 gelagertes Exzenterachsglied 48, 49 fest, zweckmäßigerweise einstückig, miteinander verbunden sind.

Der Führungshalter 23 weist in axialer Richtung neben jedem Einzelexzenterglied 33a, 33b, 34a, 34b einen Lagerarm 50, 51, 52, 53 auf, sodass jedes Exzenterachsglied 48, 49 an zwei der Lagerarme 50, 51 beziehungsweise 52, 53 drehbar gelagert ist. Dabei sind die beiden jeweiligen Lagerarme 50, 51 beziehungsweise 52, 53 mit axialem Abstand zueinander angeordnet.

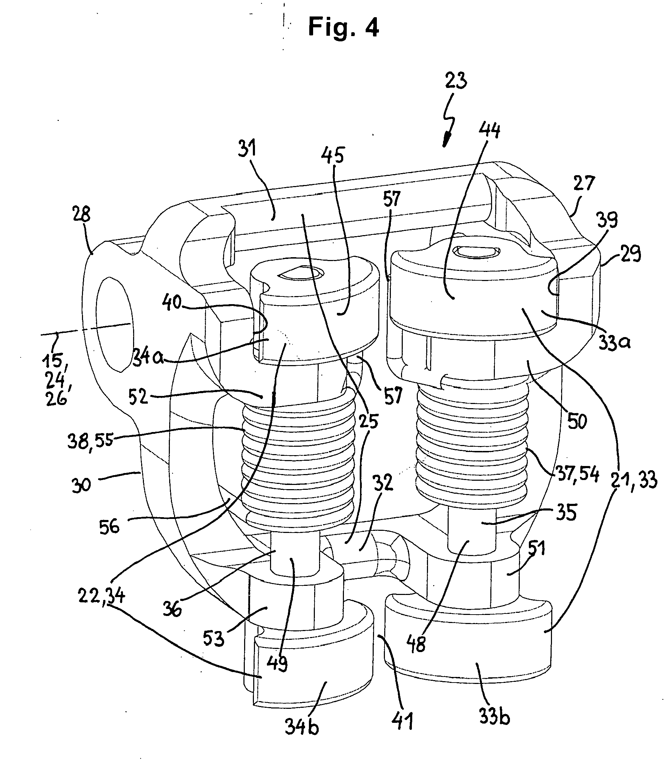

Die beiden jeweils ein Exzenterelement 33, 34 belastenden Federeinrichtungen 37, 38 werden zweckmäßigerweise von einer koaxial zur Exzenterachse 35, 36 des betreffenden Exzenterelements 33, 34 angeordneten Torsionsschraubenfeder 54, 55 gebildet, die sich einerseits am Führungshalter 23 und andererseits am jeweiligen Exzenterelement 33, 34 abstützt. Insbesondere aus Figur 4 ist ersichtlich, dass das jeweilige eine Federende 56 an einer feststehenden Fläche des Führungshalters 23 und das jeweilige andere Federende 57 am zugewandten Einzelexzenterglied 33a beziehungsweise 34a anliegt.

Die beiden Torsionsschraubenfedern 54, 55 sind jeweils zwischen den beiden Lagerarmen 50, 51 beziehungsweise 52, 53 angeordnet und werden vom betreffenden Exzenterachsglied 48 beziehungsweise 49 durchgriffen.

Bei der oben ausführlich beschriebenen Ausführungsform sind die beiden Exzenterelemente 33, 34 am um die zur Pendelachse 17 parallele Schwenkachse 24 schwenkbaren Führungshalter 23 angeordnet. Die Ausbildung der Führungselemente als Exzenterelemente ist jedoch nicht hierauf beschränkt. Die Exzenterelemente können bei Hubsägen und dabei insbesondere bei Stichsägen allgemein und daher auch bei Sägen mit einer feststehenden Stützrolle anstelle der Pendelrolle oder bei Sägen ohne eine der Sägeblatt-Rückseite zugeordnet Rolle verwendet werden. Die Exzenterelemente können dann ortsfest an der Säge angeordnet werden.

## Patentansprüche

1. Hubsäge, insbesondere Stichsäge, mit einer Antriebseinheit zum Antreiben eines Sägeblattes länglicher Gestalt, das zwei zueinander parallele Seitenflächen aufweist und an seiner Vorderseite zur sägenden Bearbeitung eines Werkstücks ausgebildet ist, zu einer hin und hergehenden Hubbewegung und zwei den beiden Seitenflächen des Sägeblattes zugeordneten Führungselementen zur seitlichen Führung des Sägeblattes, **dadurch gekennzeichnet, dass** die beiden Führungselemente (21, 22) jeweils von einem Exzenterelement (33, 34) gebildet werden, das um eine zur Längsrichtung des Sägeblattes (7) parallele Exzenterachse (35, 36) verdrehbar gelagert und durch eine Federeinrichtung (37, 38) so belastet ist, dass das Verdrehen des jeweiligen Exzenterelements (33, 34) im Sinne einer Vergrößerung des Abstandes zwischen den beiden Exzenterelementen (33, 34) entgegen der Federkraft erfolgt.

2. Hubsäge nach Anspruch 1, **dadurch gekennzeichnet, dass** die beiden Exzenterelemente (33, 34) jeweils mindestens zwei mit axialem Abstand zueinander angeordnete Einzelexzenterglieder (33,a, 33b, 34a, 34b) aufweisen.

3. Hubsäge nach Anspruch 2, **dadurch gekennzeichnet, dass** die Einzelexzenterglieder (33a, 33b, 34a, 34b) durch ein verdrehbar gelagertes Exzenterachsglied (48 bzw. 49) fest miteinander verbunden sind.

4. Hubsäge nach einem der Ansprüche 1 bis 3, **dadurch gekennzeichnet, dass** die beiden Exzenterelemente (33, 34) einen Einsteckspalt zum Einstecken des Sägeblattes (7) mit seiner Rückseite voran begrenzen, wobei sich der Einsteckspalt beim Verdrehen der Exzenterelemente (33, 34) in der Einsteckrichtung (42) des Sägeblattes (7) entsprechender Drehrichtung (43) entgegen den Federkräften verbreitert.

5. Hubsäge nach einem der Ansprüche 1 bis 4, **dadurch gekennzeichnet, dass** die jeweilige Federeinrichtung (37, 38) von einer koaxial zur Exzenterachse (35, 36) des betreffenden Exzenterelements (33, 34) angeordneten Torsionsschraubenfeder (54, 55) gebildet wird, die sich einerseits ortsfest und andererseits am Exzenterelement (33, 34) abstützt.

6. Hubsäge nach Anspruch 5, **dadurch gekennzeichnet, dass** die beiden Torsionsschraubenfedern (54, 55) jeweils vom Exzenterachsglied (48, 49) des betreffenden Exzenterelements (33, 34) durchgriffen werden und sich an einem der Einzelexzenterglieder (33a, 33b, 34a, 34b) des Exzenterelements abstützen.

7. Hubsäge nach einem der Ansprüche 1 bis 6, **dadurch gekennzeichnet, dass** die Exzenterelemente (33, 34) bei fehlendem Sägeblatt jeweils durch die Federkraft gegen einen ortsfesten Anschlag (39, 40) gehalten werden.

8. Hubsäge nach einem der Ansprüche 1 bis 7, **dadurch gekennzeichnet, dass** die beiden Exzenterelemente (33, 34) jeweils eine im Wesentlichen einer Ellipse entsprechende Umfangsfläche (44, 45) aufweisen, wobei das Verhältnis Nebenachsenlänge (N) zu Hauptachsenlänge (H) der Ellipse kleiner als 0,8 ist.

9. Hubsäge nach einem der Ansprüche 1 bis 8, **dadurch gekennzeichnet, dass** die beiden Exzenterelemente (33, 34) an einem Führungshalter (23) angeordnet sind, der eine der Sägeblatt-Rückseite (13) zugeordnete und beim Betrieb an dieser anliegende Abstützeinrichtung (25) bildet.

10. Hubsäge nach Anspruch 9, **dadurch gekennzeichnet, dass** der Führungshalter (23) zwei jeweils eines der Exzenterelemente (33, 34) haltende Seitenpartien (29, 30) aufweist und die Abstützeinrichtung (25) von mindestens einem die beiden Seitenpartien (29, 30) verbindenden Abstützsteg (31, 32) des Führungshalters (23) gebildet wird.

11. Hubsäge nach Anspruch 9 oder 10, **dadurch gekennzeichnet, dass** die Abstützeinrichtung (25) von zwei in Längsrichtung des Sägeblattes (7) mit Abstand zueinander angeordneten Abstützstegen (31, 32) gebildet wird.

12. Hubsäge nach einem der Ansprüche 9 bis 11, **dadurch gekennzeichnet, dass** der Sägeblatt-Rückseite (13) eine Pendelrolle (14) zugeordnet ist, die an einem pendelnd gelagerten und beim Betrieb eine Pendelbewegung ausführenden Pendelrollenhalter (16) angeordnet ist, so dass das Sägeblatt (7) eine Hubbewegung mit überlagerter Pendelkomponenten ausführt, und dass der Führungshalter (23) um eine zur Pendelachse (17) parallele Schwenkachse (24) schwenkbar gelagert ist, so dass der Führungshalter (23) beim Betrieb unter Beibehaltung seiner Ausrichtung relativ zum Sägeblatt (7) eine der Pendelkomponente der Hubbewegung des Sägeblattes (7) entsprechende, hin und her schwenkende Schwenkbewegung ausführt.

13. Hubsäge nach Anspruch 12, **dadurch gekennzeichnet, dass** die Schwenkachse (24) des Führungshalters (23) am Pendelrollenhalter (16) angeordnet ist.

14. Hubsäge nach Anspruch 13, dass die Schwenkachse (24) des Führungshalters (23) koaxial zur Rollenachse (15) der Pendelrolle (14) angeordnet ist.

15. Hubsäge nach Anspruch 14, **dadurch gekennzeichnet, dass** die Schwenkachse (24) des Führungshalters (23) und die Rollenachse (15) der Pendelrolle (14) von einer gemeinsamen Lagerachse (26) gebildet werden.

16. Hubsäge nach Anspruch 15, **dadurch gekennzeichnet, dass** der Führungshalter (23) zwei die Pendelrolle seitlich übergreifende Lagerpartien (27, 28) aufweist, so dass die Pendelrolle (14) zwischen den beiden Lagerpartien (27, 28) angeordnet ist, wobei der Führungshalter (23) mit seinen Lagerpartien (27, 28) auf der gemeinsamen Lagerachse (26) gelagert ist.

17. Hubsäge nach einem der Ansprüche 12 bis 16, **dadurch gekennzeichnet, dass** der Führungshalter (23) in axialer Richtung der ihn lagernden Schwenkachse (24) bewegbar angeordnet ist.

18. Hubsäge nach einem der Ansprüche 12 bis 17, **dadurch gekennzeichnet, dass** der Führungshalter (23) in Längsrichtung des Sägeblattes (7) beiderseits der Schwenkachse (24) an der Sägeblatt-Rückseite (13) anliegt.
